# EUROPEAN PATENT APPLICATION

(11) **EP 0 917 950 A1**
(43) Date of publication of application: **26.05.1999**
(21) Application number: 97203643.8
(22) Date of filing: 21.11.1997
(51) Int. Cl.: B32B 7/02, B32B 25/08

(54) **Laminated product of vulcanized rubber by a harder TPE to a softer TPE**

(71) Applicant: DSM N.V., 6411 TE Heerlen (NL)
(72) Inventor: Vos, Herman Maria Alphonsus, 6181 NB Elsloo (NL)

(57) **Abstract**

The invention relates to a joined vulcanized rubber product, comprising a section made of a vulcanized rubber and a section made of a thermoplastic elastomer.

The invention is characterized in that the sections are joined together by means of a thermoplastic elastomeric interlayer having a higher hardness than the thermoplastic elastomer section.

The invention also relates to a laminate, comprising a layer of a thermoplastic elastomer and a harder thermoplastic elastomeric layer.

The invention also relates to a process for the manufacture of such rubber products.

## Description

The invention relates to a joint vulcanized rubber product comprising a section made of a vulcanized rubber and a section made of a thermoplastic elastomer. The invention also relates to a process for the manufacture of such a rubber product.

For many years already vulcanized rubber products have been used in the automotive industry for instance, as sealing material and for other applications. The disadvantage is that such products cannot easily be joined to each other. Fusion welding is difficult and results in a low adhesion strength. The same problem is present when a vulcanizable rubber compound is placed between rubber sections and thereafter vulcanized. Adding a polyolefin (for example polyethylene) to the rubber compound (i.e. the rubber composition before it is vulcanized) results in some improvement, but the adhesion strength is still inadequate.

From EP-A-718,137 a joined vulcanized rubber product, consisting of a vulcanized rubber and a thermoplastic elastomer (TPE), bonded to each other, is known. It has been found that the adhesive force between the two sections is low, and too low for most applications. Rubber products for instance in the form of sealing profiles in automotives have to have an adhesion force of at least 3,5 MPa, which is not offered by a product according to said patent application.

In several applications the rubber product has to be flexible, and therefore EP-A-718,137 suggests to use a thermoplastic elastomer section having a Shore A hardness of between 45 and 95. It has now been found that on the lower end of this hardness range the adhesion is insufficient, whereas on the higher end of said range the flexibility of the thermoplastic elastomeric section is too low.

The invention now offers a solution to this problem. The invention relates to a joined vulcanized rubber product, comprising a section made of a vulcanized rubber and a section made of a thermoplastic elastomer, and is characterized in that the sections are joined together by means of a thermoplastic elastomeric interlayer having a higher hardness than the thermoplastic elastomer section. This results in a rubber product with a strong bond between the sections (the rubber and the TPE). Rubber products for which the invention offers a solution are for instance products consisting of rubber bonded to rubber (such as multilayer systems - or laminates - or corner sections) and e.g. overmoulds of rubber with a TPE.

In the following the component parts of the vulcanized rubber product will be described in further detail.

### A) The rubber

In a rubber product according to the invention one of the sections is a vulcanized rubber. By a rubber is understood in this invention a hydrocarbon rubber, such as natural rubber (NR), butyl rubber (whether or not halogenated or crosslinked with e.g. divinylbenzene), styrene-butadiene rubber (SBR), nitrile-butadiene rubber (NBR) (both also in their hydrogenated form, viz. HSBR and HNBR, respectively), EPDM (a rubber composed of ethylene, an **α**-olefin (in particular propylene) and optionally a diene as third monomer (mostly dicyclopentadiene and in particular ethylidene norbornene or vinyl norbornene)), and others. An enumeration of suitable rubbers can be found in W. Hofmann's Rubber Technology Handbook, Hanser Verlag, Munich 1989. The invention in particular relates to a rubber product on the basis of EPDM. The rubber can contain the additives that are commonly used for these rubbers, such as extender oil, carbon black, pigments, stabilizers and the like. The person skilled in the art will be familiar with these additives. The rubber has been vulcanized with agents that are likewise known to the person skilled in the art, for instance by means of sulphur (compounds), peroxides, phenolic resins and the like.

### B) The TPE

Another section of the rubber product according to the invention is the thermoplastic elastomer (TPE). A thermoplastic elastomer is a product which combines the flexibility of a rubber with the strength and the processability of a thermoplast. The TPE based section according to the invention can be chosen from the group comprising the styrene-based TPEs (STPEs) and the rubber/thermoplast blends, which include the thermoplastic elastomeric polyolefins (TPOEBs) and the thermoplastic elastomeric vulcanizates (TPOEVs).

### a) Styrene-based TPEs

Styrene-based thermoplastic elastomers are polymers which consist of polymer chains with a polydiene central block and polystyrene terminal blocks (also called SBCs, styrene block copolymers). The diene block gives the polymer its elastomeric properties, while the polystyrene blocks constitute the thermoplastic phase. By preference, the polydiene block is composed of butadiene units, so that the resulting TPE is an SBS (styrene-butadiene-styrene polymer).

Since the main chain of an SBS contains unsaturations which are oxidation sensitive, the styrene-based TPE preferably is a hydrogenated polymer, i.e. a polymer in which at least part of the aliphatic unsaturation has been hydrogenated. Such products are also referred to as SEBS polymers (styrene-ethylene/butylene-styrene).

Where in the foregoing the presence of styrene and/or butadiene in the STPEs has been mentioned, this is to elucidate rather than to restrict the term 'STPE', considering that an analogous result is to be obtained with polymers comprising blocks of polyisoprene (SIS: styrene-isoprene-styrene) or based on substituted styrene (for example **α**-methylstyrene).

### b) Rubber-thermoplast blends

The rubber-thermoplast blends, and more specifically the TPOEs (thermoplastic polyolefin elastomers) can roughly be divided into three categories:
1) TPOEBs, which are blends of a thermoplastic resin, specifically a polyolefin, and a hydrocarbon rubber;
2) TPOEVs, which are blends of a thermoplastic resin, specifically a polyolefin, and an at least partially vulcanized hydrocarbon rubber;
3) TPOERs, or reactor thermoplastic polyolefin elastomers, which are the product of a copolymerization of an elastomer segment on a thermoplastic crystalline resin, especially a polyolefin.
The difference between categories 1) and 2) on the one hand, and category 3) on the other therefore lies in the fact that the former categories comprise blends and the latter category comprises copolymers. In all cases the morphology is that of a crystalline resin, specifically a polyolefin, as a continuous matrix in which the elastomer is distributed, whether or not partially crosslinked, as a dispersed phase. When a TPOER has been prepared the rubber component can also be at least partially vulcanized; since the rubber component is already anchored to the resin, especially to the polyolefin component, this is not strictly necessary.

The term 'TPOE' here and in the following is understood to refer to a combination of a (semi)-crystalline resin, especially a (semi-)crystalline polyolefin (such as polyethylene and by preference polypropylene, homopolymeric as well as copolymeric) and a rubber which is dispersed in it and, in the case of a TPOEV, is at least partially vulcanized. The rubber in the TPOE can be any hydrocarbon rubber, of the type as has also been described under A) above ('The rubber'). Use can also be made of an SBC (as described under B, a)) as the rubber in the TPOE. As suitable rubber for the TPOE can therefore be mentioned: natural rubber, butyl rubber (whether or not halogenated or crosslinked), SBR, NBR (both hydrogenated or non-hydrogenated) and EPDM. The rubber in the TPOE preferably is an EPDM or a butyl rubber since these contribute to a particular improvement of the physical properties of the rubber product to be obtained with it. The degree of vulcanization of the rubber in a TPOEV is preferably high (i.e. the proportion of extractable rubber is preferably lower than 15%, more preferably lower than 5%, as determined by extraction with boiling xylene).

Other types of resins that can be used as the thermoplast in the "rubber-thermoplast" blends of the invention can be the polyamides (like nylon 6, nylon 6,6, nylon 4,6 and other homologues), polycarbonates, polyethers, polyesters, PVC as well as other crystalline resins known in the art.

### C. The thermoplastic elastomeric interlayer

In the joined vulcanized rubber product of the invention a thermoplastic elastomeric interlayer is present which joins the sections of the rubber product. A major requirement for being an effective interlayer is the fact that the hardness of the interlayer is higher than that of the thermoplastic elastomer section.

The thermoplastic elastomeric interlayer can be of the same nature as described before for the thermoplastic elastomer. This means that the interlayer is also made of a TPE, as described in section B, that is: also selected for the group comprising STPE, TPOEB, TPOEV and TPOER.

As indicated before, the thermoplastic elastomer section and the thermoplastic elastomeric interlayer have a different hardness. For the thermoplastic elastomer section the Shore A hardness is generally at most 80, more preferably between 45 and 80, and even more preferred between 50 and 75. For the interlayer the Shore A hardness is generally above 80, more preferably at least 90. The hardness of the interlayer has even more preferred a value between 35 and 60 Shore D. Given the characteristics (like nature, polarity) of the vulcanized rubber section as well as of the thermoplastic elastomeric section that need to be joined to the joined vulcanized rubber product of the invention, the skilled man is well capable to select an adequate product to be used as the thermoplastic elastomeric interlayer. The nature of such interlayer has to be tuned with the nature of the sections to be joined.

As an effect of the present invention, the adhesive strength between the rubber and the TPE section is improved; the strength of the resulting rubber product is now much more determined by the cohesive strength of the TPE section. To even improve this cohesive strength of the TPE section (in cases where rubber section are joined at their respective ends, like in cornermoulds), it is preferred to have, at least in part, the TPE section covered by a thin layer of the thermoplastic elastomeric interlayer. As a result hereof, the strength of the rubber product is improved, but the flexibility of the TPE section is not significantly reduced.

The invention is also applicable in the situation where the rubber is also a thermoplastic elastomer and where, moreover, the adhesion force between the starting products is inadequate. In that case as well the application of an thermoplastic elastomeric interlayer, having a higher hardness, is the indicated option.

The invention also relates to a process for the manufacture of rubber products on the basis of a vulcanized rubber and a thermoplastic elastomer. The process is characterized in that it comprises the following steps:
a) placing a vulcanized rubber part in a joining mould;
b) feeding a melt of the thermoplastic elastomeric interlayer and a melt of the thermoplastic elastomer in an appropriate order to said mould;
c) discharging the so obtained rubber product from the mould.

Given the nature of the sections to be joined, the skilled man is capable of selecting the proper conditions (like mould temperature, temperature of the melts, residence time in the mould, rate of feeding of the melts) for preparing the joined vulcanized rubber product.

In one preference for the process of the invention the two melts (that of the thermoplastic elastomeric interlayer and that of the thermoplastic elastomer) are consecutively fed to the mould via a 2 K-injection moulding process, which as such is known by injection moulders.

Another preference for the process is that the two melts are fed to the mould consecutively. At first the vulcanized rubber section(s) and the thermoplastic elastomeric interlayer are joined together, followed by joining the resulting product with the thermoplastic elastomer. This process can take place in a single mould, but can also be performed in two separate moulds.

The process according to the invention provides a unique possibility to control independantly the adhesion of the sections and the flexibility of the rubber product, especially the flexibility of the thermoplastic elastomeric section.

The invention is suitable in particular for a process for the manufacture of a rubber profile in corner bond (a corner mould). It is of course an additional option to cover the rubber product itselve with the TPE (while use is made of the thermoplastic elastomeric interlayer), so that the product obtained is a rubber product whose exterior consists entirely of the TPE.

The invention also relates to a (process for the manufacture of a) rubber overmould comprising a layer of rubber which, for instance by means of coextrusion, is / has been provided with a TPE-based layer, the rubber layer and the TPE layer being joined together by means of the thermoplastic elastomeric interlayer, as described befor.

While the rubber is being bonded to the TPE (for instance in the manufacture of the rubber profile or the laminate) the temperature at the interface between the rubber and the TPE has to be sufficiently high for the intended adhesion to take place, and on the other hand low enough to avoid, for instance, thermal damage to the rubber and the TPE. The surface temperature for a good adhesion by preference lies between 120 and 280°C, more preferably between 200 and 260°C. Application of pressure also promotes the interaction between the rubber, the TPE, and the thermoplastic elastomeric interlayer, and thereby the adhesion. It is not always required for the TPE and/or the rubber as a whole to have said temperature. Since the bonding is limited to the interface of the sections to be joined, it is also an option to ensure that the contact surfaces have said temperature. Such a surface temperature can be reached for instance by means of infrared irradiation. A microwave is also applicable.

The effect of the invention can also be obtained by using a laminate comprising a layer of a TPE, and a thermoplastic elastomeric layer having a higher hardness than the TPE. More preferred the laminate is of a sandwich structure comprising two thermoplastic elastomeric core layers and a TPE inner part in which the thermoplastic elastomeric core layers have a higher hardness than the TPE inner part.

This laminate can then be placed e.g. between two rubber sections to be joined. The joining of the laminate and the rubber sections can then take place by heating at least the interface to a sufficient temperature to obtain the adhesion.

Such a laminate can be prepared by as such known techniques as e.g. co-extrusion.

The invention is widely applicable; it can be used for the manufacture of door profiles or tubes, involving the bonding of a TPE layer on or on top of a rubber layer, for bonding of roofings on the basis of rubber, for the manufacture of overmouldings.

The invention will be elucidated by means of the following examples and comparative experiment; these examples and the comparative experiment, however, are not meant as a restriction of the
invention.

### Examples I-II

An EPDM-compound was joined with a thermoplastic elastomer (TPV) (based on polypropylene and a vulcanized EPDM); in Example I the TPV had a Shore A hardness of 65; in Example II the TPV had a Shore D hardness of 45.

The temperature of the TPV-melt was 281°C; the mould-temperature was 81°C and the backpressure was 7.5 MPa.
The adhesion results (according to ASTM D412) are given in Table I.

**Table I**

| | Example I | Example II |
|---|---|---|
| TPV Grade | 65 Shore A | 45 Shore D |
| Adhesion (MPa) | 3.3 | 8.1 |

The results indicate that a flexible TPV has only a low adhesive force, whereas a high adhesive force is only obtained with a hard (i.e. rigid or inflexible) TPV.

## Claims

1. Joined vulcanized rubber product, comprising a section made of a vulcanized rubber and a section made of a thermoplastic elastomer, characterized in that the sections are joined together by means of a thermoplastic elastomeric interlayer having a higher hardness than the thermoplastic elastomer section.

2. Laminate comprising a thermoplastic elastomer, and a thermoplastic elastomeric layer having a higher hardness than said thermoplastic elastomer.

3. Rubber product or laminate according to claims 1 or 2, characterized in that the thermoplastic elastomer and/or the thermoplastic elastomeric (inter)layer is a thermoplastic polyolefin elastomer.

4. Rubber product or laminate according to anyone of claims 1-3, characterized in that the thermoplastic elastomer has a Shore A hardness of between 45 and 80.

5. Rubber product or laminate according to anyone of claims 1-4, characterized in that the thermoplastic elastomeric (inter)layer has a Shore A hardness of at least 90.

6. Rubber product or laminate according to anyone of claims 1-5, characterized in that the thermoplastic elastomer and/or the thermoplastic elastomeric (inter)layer is a thermoplastic vulcanizate.

7. Rubber product or laminate according to claim 3, characterized in that the rubber in the thermoplastic elastomer and/or the thermoplastic elastomeric (inter)layer is selected from the group comprising butylrubber, EP(D)M and elastomeric styrene blockcopolymer.

8. Rubber product or laminate according to claim 3, characterized in that the polyolefin in the thermoplastic elastomer and/or the thermoplastic elastomeric (inter)layer is a polypropylene homo-or copolymer.

9. Rubber product or laminate according to claim 6, characterized in that the rubber in the thermoplastic vulcanizate is vulcanized to the the extend that not more than 15% of the rubber is extractable, using boiling xylene.

10. Rubber product or laminate according to claims 1 or 2, characterized in that the thermoplastic elastomer and/or the thermoplastic elastomeric (inter)layer is selected from the group comprising (hydrogenated) elastomeric styrene blockcopolymers and blends of a polyolefin with such a blockcopolymer.

11. Rubber product or laminate according to anyone of claims 1-10, characterized in that the thermoplastic elastomer has a Shore A hardness of between 50 and 75.

12. Rubber product or laminate according to anyone of claims 1-11, characterized in that the thermoplastic elastomeric (inter)layer has a Shore D hardness of between 35 and 60.

13. Laminate according to anyone of claims 1-12, characterized in that the laminate is of a sandwich structure comprising two thermoplastic elastomeric core layers and an inner part of the thermoplastic elastomer, and wherein the core layers have a higher hardness than the innner part.

14. Cornermould and/or overmould, comprising a rubber product according to anyone of claims 1-12.

15. Process for the preparation of a rubber product according to anyone of claims 1-12, comprising the following steps:
a) placing a vulcanized rubber part in a joining mould;
b) feeding a melt of the thermoplastic elastomeric interlayer and a melt of the thermoplastic elastomer in an appropriate order to said mould;
c) discharging the so obtained rubber product from the mould.

16. Process according to claim 15, characterized in that the two melts are consecutively fed to the mould via a 2K-injection moulding process.

17. Process according to claim 15, characterized in that the two melts are fed to the mould consecutively, in that at first the rubber section(s) and the thermoplastic elastomeric interlayer are joined together, followed by joining with the thermoplastic elastomer.
